Europäisches Patentamt

European Patent Office

Office européen des brevets

(19)

(11) Publication number: **0 189 339**
**B1**

(12) **EUROPEAN PATENT SPECIFICATION**

(45) Date of publication of patent specification: **13.06.90**

(51) Int. Cl.⁵: **G 01 F 23/28, G 01 S 17/36**

(21) Application number: **86400031.0**

(22) Date of filing: **08.01.86**

(54) Liquid level height-measuring apparatus.

(30) Priority: **09.01.85 JP 1322/85 u**

(43) Date of publication of application:
**30.07.86 Bulletin 86/31**

(45) Publication of the grant of the patent:
**13.06.90 Bulletin 90/24**

(84) Designated Contracting States:
**CH DE FR GB LI SE**

(56) References cited:
**EP-A-0 117 574**
**EP-A-0 135 423**
**WO-A-83/03135**
**DE-A-2 630 789**

(73) Proprietor: **Kabushiki Kaisha TOPCON
75-1, Hasunuma-cho Itabashi-ku
Tokyo (JP)**

(72) Inventor: **Horikawa, Yoshio
c/o Tokyo Kogaku Kikai Kabushiki Kaisha
75-1, Hasunuma-cho Tokyo (JP)**
Inventor: **Kimura, Kazuaki
c/o Tokyo Kogaku Kikai Kabushiki Kaisha
75-1, Hasunuma-cho Tokyo (JP)**
Inventor: **Sugai, Hiroo
c/o Tokyo Kogaku Kikai Kabushiki Kaisha
75-1, Hasunuma-cho Tokyo (JP)**

(74) Representative: **Mongrédien, André et al
c/o SOCIETE DE PROTECTION DES INVENTIONS
25, rue de Ponthieu
F-75008 Paris (FR)**

Courier Press, Leamington Spa, England.

EP 0 189 339 B1

## Description

Field of the invention

The present invention relates to a light wave distance-meter for measuring a distance up to an object to be distance-measured by using light waves. More specifically, the invention relates to a liquid level height-measuring apparatus for measuring a height of a liquid level to be distance measured by using such a light wave distance-meter. This liquid level height-measuring apparatus is used for measuring a height of a level of crude oil in a crude oil tank.

Background of the invention

The present applicant have previously disclosed a liquid level height-measuring apparatus using a light wave distance-meter in EP—A—135423 (published 27.3.85; Japanese patent application No. 138,742/1983; title of the invention: Optical adaptor for light wave distance-meter, filed on July 30, 1983). This application exemplifies a crude oil level height-measuring apparatus for measuring a height of crude oil level in a crude oil tank. According to this apparatus, a light wave distance-meter main body with an electric system is installed in a control housing far from the crude oil tank; an objective optical means is arranged in the crude oil tank for irradiating measuring light waves upon the level of the crude oil as a level to be distance-measured and condensing reflected measuring light waves reflected by the level of the crude oil; the object optical means and the light wave distance-meter main body are optically connected together by an optical fiber as a light wave transmission piping member; the distance-measuring light waves optically modulated at a given modulation frequency are generated from a distance-measuring light wave generating means of the light wave distance-meter main body; the distance-measuring light waves are led to the objective optical means through the optical fiber to irradiate the distance-measuring light waves upon the level surface of the crude oil; the reflected distance-measuring light waves reflected on the crude oil level surface are condensed by the objective optical means again; and the reflected distance-measuring light waves are led to a light recieving means of the light wave distance-meter main body through the optical fiber.

The height of the liquid level is measured based on a phase difference as a time lag between the distance-measuring light waves and reflected distance-measuring light waves. The above liquid level height-measuring apparatus is adapted to directly measure the distance to be measured including the whole length of the light wave transmission piping member. The height of the liquid level is determined by subtracting the whole length of the light wave transmission piping member as a known physical amount from the measured distance.

However, as the crude oil tanks have been large-scaled and a number of the crude oil tanks have come to be concentratively controlled, the distance from the control housing to the respective crude oil tanks increases and the whole length of the light wave transmission piping member accordingly increases. Thus, it is necessary to employ from several ten to one hundred and several ten meters in length of the light wave transmission piping member.

However, with the increase in length of the light wave transmission piping member, expansion and contraction amounts due to temperature changes increases, so that the whole length of the light wave transmission piping member can no longer be regarded as the known physical amount, and errors in the measured distance take place due to the expansion and contraction of the light wave transmission piping member owing to temperature changes. The errors of the measured distance due to the expansion and contraction of the light wave transmission piping member owing to the temperature changes take place when a photoconductive wave pipe of a refraction and reflection optical system is employed as the light wave transmission piping member.

Further, since difference in the transmission distance between the distance-measuring light waves and the reflected distance-measuring light waves both transmitted inside of the optical fiber is proportional to the whole lenngth of the whole length of the optical fiber, the phase difference between the distance-measuring light waves and the reflected light waves increases with the increase in length of the optical fiber due to the above proportional relation to produce errors in the measured distance. In addition, the phase difference between the distance-measuring light waves and the reflected light waves changes due to bent portions on way of the arranged optical fiber and bending thereof by wind, and errors of the measured distance induced thereby increases with increase in length of the optical fiber.

Furthermore, other liquid level height measuring apparatuses are known by the documents WO—A—83/03135 and DE—A—2 630 789. The first document discloses in particular an apparatus as defined in the preamble of claim 1.

The present invention has been made taking the above-mentioned circumstances into consideration, and is aimed at the provision of a liquid level height-measuring apparatus which can eliminate errors of measured distances due to increase in length of a light wave transmission piping member to the utmost.

These and other objects and advantages of the present invention will be well appreciated upon reading of the invention when taken in conjunction with the attached drawings with understanding that some modifications, variations, and changes could be easily done by the skilled in the art to which the invention pertains without departing from the scope of the claims appended thereto.

## Summary of the invention

The liquid level height-measuring apparatus according to the present invention is characterized in that along the light wave transmission piping member is arranged a reference light wave transmission piping member which has substantially the same physical properties as those of the light wave transmission piping member, is set at substantially the same length as that of the light wave transmission piping member, and is adapted to circularly transmit the distance-measuring light waves as reference light waves toward a light receiving means thereby giving the distance-measuring light waves to the light receiving means.

According to the liquid level height-measuring apparatus of the present invention, the whole length of the reference light wave transmission piping member is preliminary measured, and this measured data can be regarded as the whole length of the light wave transmission piping member. The height of the liquid level can be determined by substracting this measured datum from a distance-measured datum including the length of the light wave transmission piping member, while the error of the measured distance due to the length of the light wave transmission piping member being removed.

The liquid level height-measuring apparatus according to the present invention is defined in the claim 1. The whole length of the reference light wave transmission piping means is preliminarily measured, and the height of the liquid level is determined by substracting thus measured data from a measured distance data while the whole length of the reference light wave transmission piping member being regarded as the light wave transmission piping means. Therefore, the present invention has the effect that distance-measuring errors with increase in the length of the light wave transmission piping member can be prevented from increasing so that the enhanced measuring accuracy of the liquid level height can be further expected. The invention also has effect that the structure thereof is simple. Other aspects of the described liquid level height measuring apparatus are claimed in the co-pending applications EP—A—188393 and 191658 with the same priority date.

## Brief description of the drawings

For better understanding of the invention, reference is made to the attached drawings, wherein:

Fig. 1 is a schematic view showing an example in which a liquid level height-measuring apparatus according to the present invention is used in the measurement of an oil level in a crude oil tank.

Fig. 2 which is not comprised in the scope of the claims is a detailed view illustrating a light wave distance-meter main body and an objective optical system unit shown in Fig. 1; and

Fig. 3 is a schematic view of an embodiment according to the present invention.

## Description of the preferred embodiments

The liquid level height-measuring apparatus according to the present invention will be explained below with respect to a case of measuring a height of a level of crude oil in a crude oil tank thereby while referring to the attached drawings.

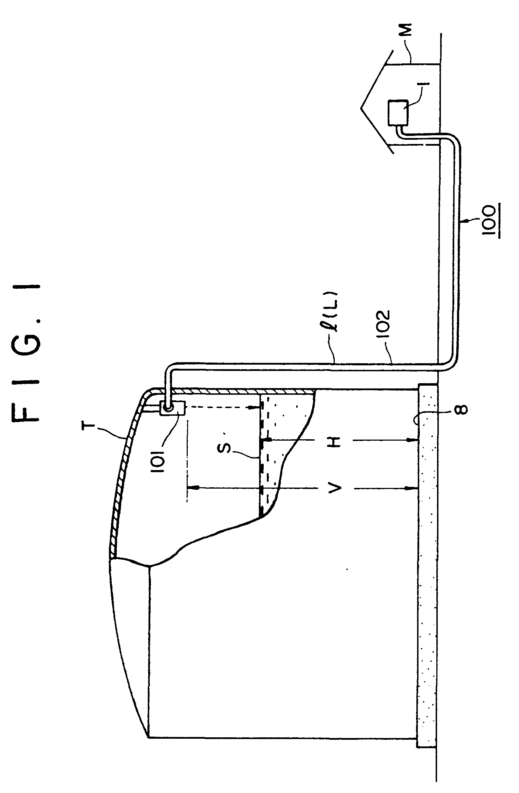

In Fig. 1, M and T show a control housing and a crude oil tank, respectively. The control housing M is installed apart far from the crude oil tank T from the explosion-avoiding standpoint of view. A light wave distance-meter main body 1 with an electric system is installed in the control housing M, and an objective optical system unit 101 as an objective optical means is hanged from the ceiling of the crude oil tank T. The objective optical system unit 101 has function to irradiate distance-measuring light waves upon the level surface S of the crude oil as a liquid level to be distance-measured and condense the reflected distance-measuring light waves reflected on the liquid level surface S of the crude oil. The light wave distance-meter main body 1 and the objective optical system unit 101 are optically connected together through an opitcal fiber 102 as a light wave transmission piping member. The liquid level height-measuring apparatus 100 is substantially constituted by the light wave-distance-meter main body 1, the objective optical system unit 101 and the optical fiber 102.

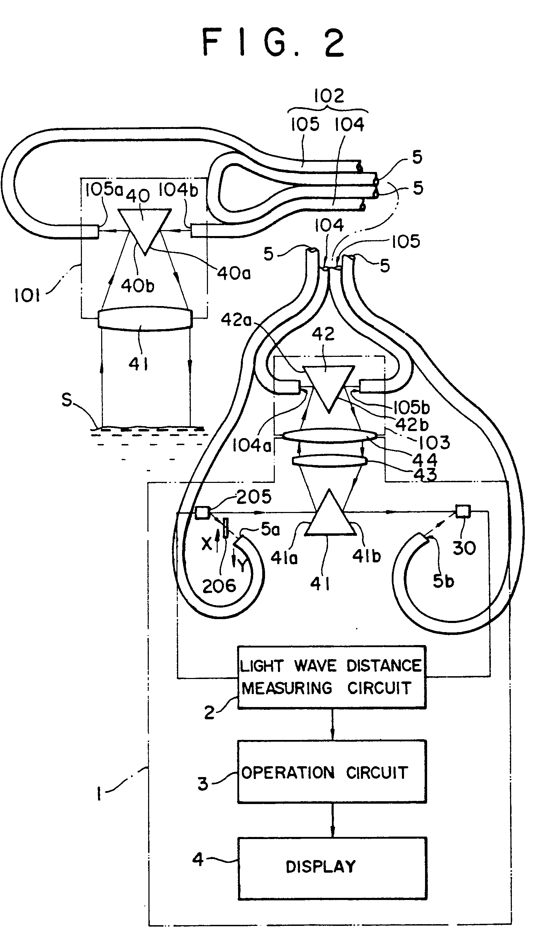

As shown in Fig. 2, the objective optical system unit 101 has an objective lens 41 which is faced with the crude oil level surface S. The light wave distance-meter main body 1 is provided with a light wave distance-measuring circuit 2 for generating and receiving the distance-measuring light waves. The light wave distance-measuring circuit 2 has a distance-measuring light wave generating means for generating distance-measuring light waves optically modulated at a given modulation frequency and a light receiving means for receiving the reflected distance-measuring light waves led through the objective optical system unit 101. The optical fiber 102 consists of an outward optical fiber 104 optically connecting the distance-measuring light wave generating means to the objective optical system unit 101 and a return optical fiber 105 optically connecting the objective optical system unit 101 to the light receiving means. Reference numerals 104a and 105a indicate incident faces of the optical fibers 104 and 105, respectively, while reference numerals 104b and 105b do ejecting faces of the optical fibers 104 and 105, respectively.

An incident face 104a of the outward optical fiber 104 faces a reflecting face 42a of a reflection prism 42, and an ejecting face 104b thereof faces a reflecting face 40a of a reflection prism 40. An incident face 105a of the return optical fiber 105 faces a reflecting face 40b of the reflection prism 40, and its ejecting face 105b faces a reflecting face 42b of the reflection prism 42. The distance-measuring light wave generating means is provided with a luminescent diode 205, which faces a reflecting face 41a of a reflection prism 41 through a shutter member 206. The light receiving means has a light receiving diode 30, which faces a reflecting face 41b of the reflection prism 41. When the shutter member 206 is located at a position shown in Fig. 2, the distance-measuring light waves optically modulated at a given modulation frequency are led to the reflection prism 41 and reflected on the reflecting face 41a thereof, and then the reflected light waves are led to the incident face 104a of the outward optical fiber 104 through the lenses 43 and 44. The distance-measuring light waves are transmitted inside of the outward optical fiber 104 and ejected from the ejecting face 104b thereof. Then, the light waves are led to the objective lens 41 where they are converted into a beam of parallel light rays, and the light rays are irradiated upon the crude oil level surface S. Upon being reflected on the crude oil level S, the distance-measuring light waves are converted into the reflected distance-measuring light waves. The reflected distance-measuring light waves are condensed by the objective lens 41 again and reflected by the reflecting face 40b of the reflection prism 40. The reflected distance-measuring light waves are transmitted inside of the return optical fiber 105 and ejected from the ejecting face 105b thereof, the ejected light waves being led to the light receiving element through the reflection prism 42, the lenses 44 and 43 and the reflection prism 41 to be photoelectrically converted. The reflection prisms 42 and the lens 44 constitutes a joint optical system 103.

The light wave distance-measuring circuit 2 is adapted to generate a processing signal to an operation circuit 3 on the basis of the distance-measuring light waves and the reflected distance-measuring light waves. The operation circuit 3 is adapted to calculate a measurement distance L including the length I of the optical fiber 102 on the basis of the distance-measuring light waves and the reflected distance-measuring light waves. A reference light wave transmission piping member 5 is arranged between the light wave distance-meter main body 1 and the objective optical system unit 101. The reference light wave transmission piping member 5 is disposed along the optical fiber 102, and has substantially the same physical properties as those of the optical fiber 102. Further, the length I' of the reference light wave transmission piping member 5 is designed to be almost the same as the length I of the optical fiber 102. An optical fiber is used as the reference light wave transmission piping member 5, and is provided with an incident face 5a and an ejecting face 5b. The incident face 5a is opposed to the luminescent diode 205, and the ejecting face 5b is opposed to the light receiving element 30. When the shutter 206 is moved in the arrow direction X, the reference light wave transmission piping member 5 receives the distance-measuring light waves generated from the luminescent diode 205 as reference light waves. The reference light waves

are circularly transmitted inside of the reference light wave transmission piping member 5, ejected toward the light receiving diode 30 from ejecting face 5b thereof and received by the light receiving diode 30.

When the shutter member 206 is moved in the arrow direction H, the distance-measuring light waves ejected toward the reflection prism 41 is shut. The operation circuit 3 preliminarily measures the whole length I' of the reference light wave transmission piping member 5, and the height H of the liquid level is determined by substracting the whole length I from the measured distance L while the whole length I' being regarded as the whole length I of the optical fiber 102. A calculating formula therefore is shown in the following:

$$H = V - (L - I)$$

wherein V is a distance from the tip end of the objective lens-optical system unit 101 to the bottom B of the crude oil tank, and the distance L is the known physical amount.

The height H of the liquid level is indicated as a measured datum by a display 4.

In the illustrated embodiment, the reference light wave transmission piping member 5 is formed completely independent of the outward optical fiber 104 and the return optical fiber 105 for measuring the distance. However, the present invention is not restricted thereto.

For instance, as mentioned below, the outward optical fiber and/or the return optical fiber may be also used for the reference light wave transmission when a light branching means and a light switch are used.

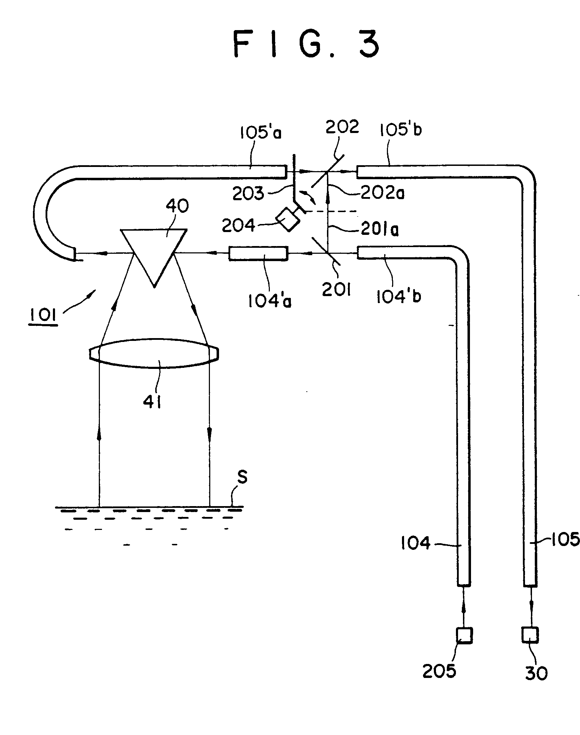

Fig. 3 shows an embodiment of such a modification in which an outward optical fiber 104 is divided into 104'a and 104'b in the vicinity of an objective optical system unit 101, and a half mirror 201 as a light branching means is interposed therebetween. On the other hand, a return optical fiber 105 is divided into 105'a and 105'b in the vicinity of the objective optical system unit 101, and a half mirror 202 is interposed therebetween. A reflection light path 201a of the half mirror 201 is coincident with an incident light path 202a of the other half mirror 202. By so doing, after light rays from the luminescent diode 205 are transmitted through the outward optical fiber 104'b, a part thereof is reflected by the half mirror 201 and reflected by the half mirror 202 again to provide reference light waves to be fed to the light receiving element 30 through the return optical fiber 105'b. A chopper 203 is so disposed as to be alternatively inserted between the half mirror 202 and the ejecting face of the return optical fiber 105'a and between the half mirror 201 and the half mirror 202 so that the light receiving element 30 may receive the distance-measuring light waves or the reference light waves selectively. Switching of the chopper 203 is performed by a rotary solenoid 204.

By the above construction, the outward and return optical fibers 104 and 105 for measuring the distance may be also used for the reference light waves.

## Claims

1. A liquid level height-measuring apparatus, comprising: light wave generating means (205) for generating light wave modulated at a predetermined modulation frequency;

objective optical means (101) for directing the light upon the surface (S) of a liquid level to be height-measured and collecting the reflected light reflected from the surface (S).

light receiving means (30) for receiving the reflected light from said objective optical means (101) and light being passed through a reference optical path;

light transmission piping members (104, 105) for optically connecting said light wave generating means (205) and said light receiving means (30) with said objective optical means (101) in order to provide a distance-measuring optical path;

said reference optical path having almost the same length as said light transmission piping members (104, 105);

means (2) for measuring the height of the liquid level (H) to be height-measured on the basis of the time delay between the reflected light wave which is passed through said distance-measuring optical path (104, 101, 105) and which is received by said light receiving means (30) and the light wave which is passed through said reference optical path and which is received by said light receiving means (30);

said light transmission piping members including an outward optical piping member (104) for optically connecting said light generating means (205) with said objective optical means (101) and a return optical piping member (105) for optically connecting said objective optical means (101) with said light receiving means (30); and

branch means disposed in vicinity of said objective optical means (101) and for optically connecting said outward optical piping member (104) with said return optical piping member (105) so that said reference optical path is provided, characterized in that

said branch means includes:

a first half mirror (201) inserted between said outward optical piping member (104) divided into two parts (104'a, 104'b);

a second half mirror (202) inserted between said return optical piping member (105) divided into two parts (105'a, 105'b);

a reflection light path (201a) of said first half mirror (201) being coincident with an incident light path (202a) of said second half mirror (202); and

means (203, 204) for interrupting alternatively said reflection light path (201a) between said first and second half mirrors (201, 202) such that said distance-measuring optical path (104, 101, 105) is selected or the optical path between said first and second half mirrors (201, 202) via said objective optical means (101) such that said reference opticaloch that said reference optical path (104'b, 201, 201a, 202, 105'b) comprising said reflection light path (201a) is selected.

2. The liquid level height-measuring apparatus according to claim 1, wherein both said outward optical piping member (104) and said return optical piping members (105) consist of optical fibers.

3. A liquid level height-measuring apparatus according to claim 1 or 2, wherein said selection means includes a chopper (203) and a rotary solenoid (204) which inserts alternatively said chopper (204) either into said optical path between said first and second half mirrors (201, 202) or into said optical path between said divided part (105'a) and said second half mirror (202).

## Patentansprüche

1. Vorrichtung zur Messung eines Flüssigkeitspegels mit Mitteln (205) zur Erzeugung von Lichtwellen, die mit einer vorgegebenen Modulationsfrequenz moduliert sind;

optischen Objektivmitteln (101), die das Licht auf die Oberfläche (S) des in seiner Höhe zu messenden Flüssigkeitspegels richten und das an der Oberfläche (S) reflektierte Licht sammeln;

Lichtempfängermitteln (30) zum Empfangen des reflektierten Lichts von den optischen Objektivmitteln (101) und des Lichts, das durch einen optischen Referenzpfad hindurchgegangen ist;

Lichtübertragungsrohrelementen (104, 105) zur optischen Verbindung der Mittel (205) zur Erzeugung von Lichtwellen und der Lichtempfängermittel (30) mit den optischen Objektivmitteln (101), um einen optischen Entfernungsmessungspfad vorzusehen;

wobei der optische Referenzpfad etwa die gleiche Länge wie die Lichtübertragungsrohrelemente (104, 105) aufweisen;

mit Mitteln (2) zur Messung der Höhe des zu messenden Flüssigkeitspegels (4) auf der Grundlage der Zeitverschiebung zwischen der reflektierten Lichtwelle, die durch den optischen Entfernungsmessungspfad (104, 101, 105) hindurchgeht und die von den Lichtempfängermitteln (30) empfangen wird und der Lichtwelle, die durch den optischen Referenzpfad hindurchgeht und die von den Lichtempfängermitteln (30) empfangen wird;

wobei die Lichtübertragungsrohrelemente ein abgehendes optisches Rohrelement (104) zur optischen Verbindung der Mittel zur Erzeugung der Lichtwellen (205) mit den optischen Objektivmitteln (101) und ein zurückführendes optisches Rohrelement (105) zur optischen Verbindung der optischen Objektivmittel (101) mit den Lichtempfängermitteln (30) umfaßt und

mit Abzweigungsmitteln, die in der Nähe der optischen Objektivmittel (101) angeordnet sind und die das abgehende optische Rohrelement (104) mit dem zurückführenden optischen Rohrelement (105) optisch verbinden, so daß der optische Referenzpfad gebildet wird, dadurch gekennzeichnet,

daß die Abzweigungsmittel

einen ersten halbdurchlässigen Spiegel (201), der in das abgehende optische Rohrelement (104) eingefügt ist, das in zwei Teile (104'a, 104'b) unterteilt ist,

einen zweiten halbdurchlässigen Spiegel (202), der in das zurückführende optische Rohrelement (105) eingefügt ist, das in zwei Teile (105'a, 105'b) aufgeteilt ist.

einen Reflexionslichtpfad (201a) des ersten halbdurchlässigen Spiegels (201), der mit einem Einfallslichtpfad (202a) des zweiten halbdurchlässigen Spiegels (202) übereinstimmt; und

Mittel (203, 204) zum alternierenden Unterbrechen des Reflexionslichtpfades (201a) zwischen dem ersten und zweiten halbdurchlässigen Spiegel (201, 202) und des optischen Pfades zwischen dem ersten und zweiten halbdurchlässigen Spiegel (201, 202 über die optischen Objektivmittel (101) aufweisen, derart,

daß alternierend der optische Enfernungsmessungspfad (104, 101, 105) und der den reflexionslichtpfad (201) umfassenden optische Referenzpfad (104'B, 201, 201a, 202, 105'b) gewählt wird.

2. Vorrichtung zur Messung des Flüssigkeitspegels nach Anspruch 1, dadurch gekennzeichnet, daß sowohl das abgehende als auch das zurückführende optische Rohrelement (104, 105) aus Lichtleitfasern bestehen.

3. Vorrichtung zur Messung des Flüssigkeitspegels nach Anspruch 1 oder 2, dadurch gekennzeichnet, daß die Auswahlmittel einen Chopper (203) und ein drehbares Solenoid (204) umfassen, das alternierend den Chopper (203) entweder in den optischen Pfad zwischen dem ersten und zweiten halbdurchlässigen Spiegel (201, 202) oder in den optischen Pfad zwischen dem abgeteilten Teil (105'a) und dem zweiten halbdurchlässigen Spiegel (202) einfügt.

**Revendications**

1. Appareil de mesure du niveau d'un liquide, comportant:

des moyens générateurs d'ondes lumineuses (205) pour générer des ondes lumineuses modulées à une fréquence de modulation prédéterminée;

des moyens optiques à objectif (101) pour diriger la lumière sur la surface (S) du niveau d'un liquide à mesurer en hauteur et pour recueillir la lumière réfléchie, réfléchie depuis la surface (S);

des moyens récepteurs de lumière (30) pour recevoir la lumière réfléchie depuis lesdits moyens optiques à objectif (101) et de la lumière parcourant une trajectoire optique de référence;

des organes de guidage de transmission de lumière (104, 105) pour connecter optiquement lesdits moyens générateurs d'ondes lumineuses (205) et lesdits moyens récepteurs de lumière (30) avec lesdits moyens optiques à objectif (101), afin de fournir une trajectoire optique de mesure de distance;

ladite trajectoire optique de référence ayant presque la même longueur que lesdits organes de guidage de transmission de lumière (104, 105);

des moyens (2) pour mesurer la hauteur du niveau du liquide (H) à mesurer en hauteur sur la base du temps de retard entre l'onde lumineuse réfléchie qui parcourt ladite trajectoire optique de mesure de distance (104, 101, 105) et qui est reçue par lesdits moyens récepteurs de lumière (30) et l'onde lumineuse qui parcourt ladit trajectoire optique de référence et qui est reçue par lesdits moyens récepteurs de lumière (30);

lesdits organes de guidage de transmission de lumière comprenant un organe de guidage optique aller (104) pour connecter optiquement lesdits moyens générateurs de lumière (205) avec lesdits moyens optiques à objectif (101) et un organe de guidage optique retour (105) pour connecter optiquement lesdits moyens optiques à objectif (101) avec lesdits moyens récepteurs de lumière (30); et

des moyens de brachement placés au voisinage desdits moyens optiques à objectif (101) et pour connecter optiquement ledit organe de guidage optique aller (104) avec ledit organe de guidage optique retour (105) de sorte que ladite trajectoire optique de référence est fournie,

caractérisé en ce que lesdits moyens de branchement comprennent:

un premier demi-miroir (201) interposé dans ledit organe de guidage optique aller (104) divisé en deux parties (104'a, 104'b);

un deuxième demi-miroir (202) interposé dans ledit organe de guidage optique retour (105) divisé en deux parties (105'a, 105'b);

une trajectoire de lumière réfléchie (201a) dudit premier-demi miroir (201) coincidant avec une trajectoire de lumière incidente (202a) dudit deuxième demi-miroir (202); et

des moyens (203, 204) pour interrompre alternativement ladite trajectoire de lumière réfléchie (201a) entre lesdits premier et deuxième demi-miroirs (201, 202) tels que ladite trajectoire optique de mesure de distance (104, 101, 105) est sélectionnée, ou la trajectoire optique entre lesdits premier et deuxième demi-miroirs (201, 202) via lesdits moyens optiques à objectif (101) tels que ladite trajectoire optique de référence (104'b, 201, 201a, 202, 105'b) comportant ladite trajectoire de lumière réfléchie (201a) est sélectionnée.

2. Appareil de mesure du niveau d'un liquide selon la revendiction 1, dans lequel ledit organe de guidage optique aller (104) et ledit organe de guidage optique retour (105) consistent tous deux en.

3. Appareil de mesure du niveau d'un liquide selon la revendication 1 ou 2, dans lequel lesdits moyens de sélection comprennent un obturateur (203) et un solénoide rotatif (204) qui interpose alternativement ledit obturateur (203) soit dans ladite trajectoire optique entre lesdits premier et deuxième demi-miroirs (201, 202), soit dans ladite trajectoire optique entre ladite partie divisée (105'a) et ledit deuxième demi-miroir (202).

# FIG. I

EP 0 189 339 B1

# FIG. 2

LIGHT WAVE DISTANCE
MEASURING CIRCUIT

OPERATION CIRCUIT

DISPLAY

2

# F I G. 3